# EUROPEAN PATENT APPLICATION

(11) **EP 2 767 778 A1**
(43) Date of publication of application: **20.08.2014**
(21) Application number: 13425026.5
(22) Date of filing: 13.02.2013
(51) Int. Cl.: F24J 2/52, H01L 31/042

(54) **System for assembling photovoltaic modules to be installed on the ground or on the top of buildings**

(71) Applicant: Contact Italia srl, 70022 Altamura , Bari (IT)
(72) Inventor: Maggi, Francesco, 70022 Altamura, Bari (IT)
(74) Representative: Russo, Saverio

(57) **Abstract**

The system includes supporting and transverse central profiles, assembled so as to form a rectangular shaped lattices or mesh for the insertion of photovoltaic modules positioned in horizontal or inclined planes.

The components of each of said profiles are mutually connected by means of automated snap, consisting of reciprocal joints and smooth or threaded pins, or other suitable automatic devices, which facilitate the rapid assembly.

The perimeter of the system is enclosed by supporting and transverse perimetric profiles parallel respectively to said supporting and transverse central profiles.

In the corresponding slots, on the perimetric profiles, if necessary, connecting flashings are inserted between the system itself and the remaining portion of the structure on which the system is applied.

## Description

The present invention relates to a system for assembling photovoltaic modules.

More specifically, the present invention relates to a system for fastening photovoltaic modules of any size and height, with and without a frame.

The mounting systems of photovoltaic modules differ from each other depending on the type of building they should be applied, civil buildings or other constructions of industrial nature, and should adapt to them or alternatively constitute plants suitable for the production of electricity installed on the ground.

In the first case, for the application to civil buildings, currently there is an increasing tendency to replace architectural elements such as, for example:
- roofs;
- opaque vertical surfaces;
- transparent or translucent surfaces on roofs;
- open and similar surfaces such as doors, windows and cabinets and not open including frame, etc..

In other words, the special components and structures that support these modules must meet the following requirements:
- replace architectural components of buildings;
- perform a function of coating parts of the building, otherwise carried out by building components not aimed for the production of electricity;
- from an aesthetic point of view, the photovoltaic system must fit comfortably within the architectural design of the building.

Currently many systems and special components are known specifically developed to integrate perfectly on pitched roofs of residential and industrial buildings to replace tiles and other similar coverings.

Some patent documents, relating to the state of the art, are cited:
- European Patent no. EP2072708 entitled "Panel structure for roofs and the like" filed on 18.12.2007 in the name of Maspi Srl;
- European Patent no. EP2302694 entitled "Device for rigidly connecting panels, in particular photovoltaic panels, to a building roof" filed on 03.09.2010 with priority n. FR20090056653 filed on 25.09.2009 in the name of Voltabri;
- Patent Application PCT WO2011066843 entitled "Mounting system for solar panels, and profile rail and anchoring devices therefor" filed on 02.12.2009 in the name of Renusol Gmbh and others;
- PCT Patent Application WO2012116777 entitled "Fastening element for a solar module frame" filed on 13.02.2012 in the name of Renusol Gmbh with priority filed on 02.03.2011;
- PCT Patent Application WO2010133242 entitled "Mounting system for solar panels and connecting bracket for same" filed on 25.11.2010 with priority filed on 20.05.2009;
- Patent no. DE202009005145 entitled "Photovoltaisches solarmodul mit indachrahmen als indach-solarsystemanordnung" filed on 14.08.2009;
- European Patent no. EP2390597A1 entitled "Profile rail, support for framed solar modules integrated to a roof and solar module assembly" filed on 26.05.2010;
- PCT Patent Application WO0002256 entitled "Frame made of shaped sections and designed for plate-like elements, and array of several such frames" filed on 01.07.1999;
- European Patent no. EP0674058 entitled "Panel fixture for façade, roof, window or door" filed on 22.03.1995 and priority filed on 24.03.1994;
- Patent no. DE3337658 entitled "Large-area solar panel comprising semiconductor photocells" filed on 17.10.1983;
- Patent no. FR2465315A1 entitled "Panneau générateur photovoltaïque assurant l'étanchéité aux intempéries d'une toiture par poses directe sur la charpente" filed on 10.09.1979;
- Patent no. DE102007036206 entitled "Solar energy element e.g. plate shaped photovoltaic element, and building surface element e.g. sheet group, fastening device for building, has clamping device for solar energy element fastened to profile strip" filed on 02.08.2007;
- PCT Patent Application WO2010112049 entitled "Mounting system for solar panels, and mounting member and positioning element for same" filed on 03.04.2009 in the name of Renusol GmbH;
- PCT Patent Application WO2011154019 entitled "Mounting system for solar panels and fastening device" filed on 08.06.2010 in the name of Renusol Gmbh;
- European Patent no. EP2065944 entitled "Dispositif support de panneaux de couverture de toiture" filed on 27.11.2008 and priority filed on 27.11.2007;
- European Patent no. EP2023402 entitled "Profilé rail dispositif de montage de panneaux photovoltaïques au sein d'une structure de bâtiment et notamment d'une toiture, et structure de ces bâtiment intégrant éléments" filed on 28.07.2008 and priority filed on 01.08.2007;
- Patent no. JP2010275808 entitled "Installation structure for solar cell panel on outside surface of building" filed on 29.05.2009.

However, the mounting systems illustrated in these patent documents present, depending on the case, some drawbacks:
- assembly difficulties and long times for installation and maintenance;
- difficulties in the removal for any maintenance;
- lack of flexibility in the case of other applications, for example for the formation of glass roofs.

The purpose of the present invention is to solve the drawbacks of the above state of art mounting systems.

The mounting system according to the present invention is extremely flexible and permits the fixing both of photovoltaic modules without frame and of traditional modules with frame of any size and height.

The structure is based on a system of aluminum guides, rubber gaskets which act as waterproofing joints and devices guaranteeing a watertight seal.

The mounting system permits the following advantages:
- simplified installation and maintenance: installation time reduced due to the ease of installation and use of templates for the installation of the profile rails;
- simplicity of finish metalwork: interlocking pieces, without cuts, with profile rails that can be supplied raw, lacquered or anodized;
- possibility to place electrical cables along the slope or through holes of the supporting profile rails;
- possibility to remove a single module without removing the adjacent ones;
- low incidence of structural weight per square meter;
- possibility of mounting modules of any size;
- flexible mounting: the system can be easily adapted both to principal residences and large roofs with low slopes;
- possibility to implement glass roofs recognized by the GSE (Gestore dei Servizi Energetici) as innovative systems.

The invention is described below with reference to the attached drawings which illustrate, respectively:

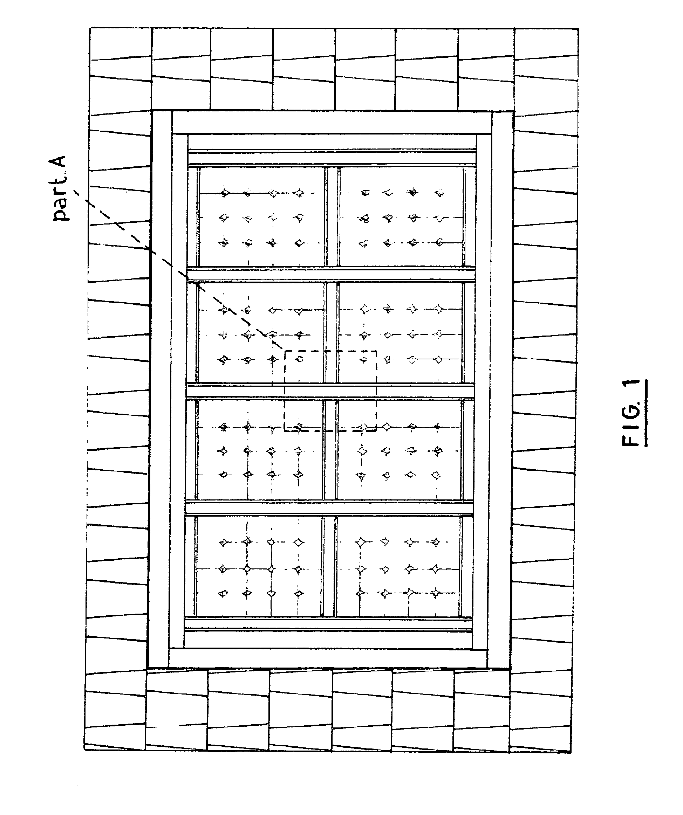

figure 1 - an example of the insertion of a photovoltaic system on a roof already covered with tiles;

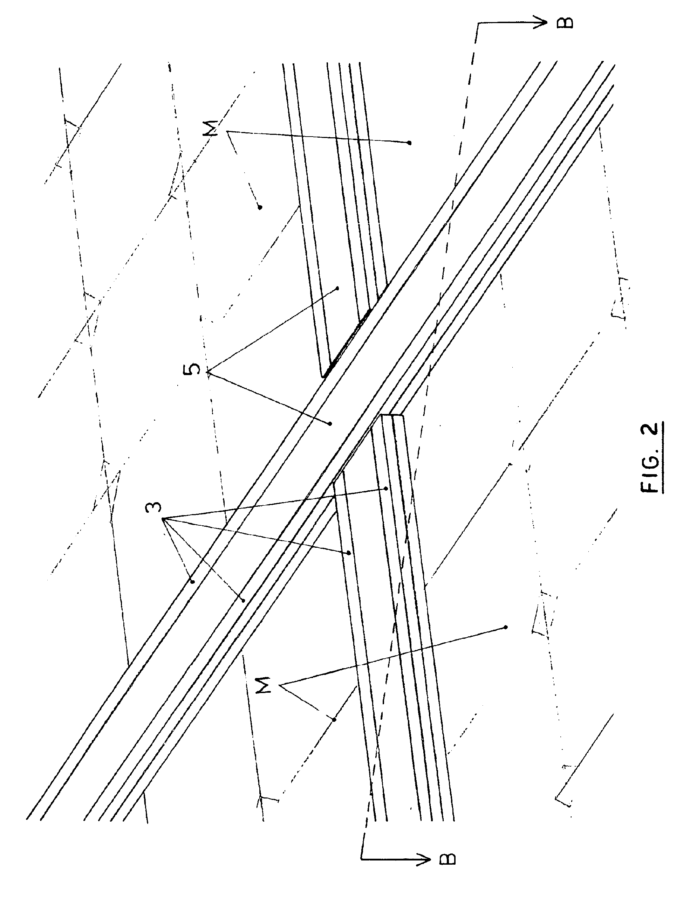

figure 2 - the detail A of figure 1 referring to a node of the mounting system or the intersection between a supporting profile rail and two transverse;

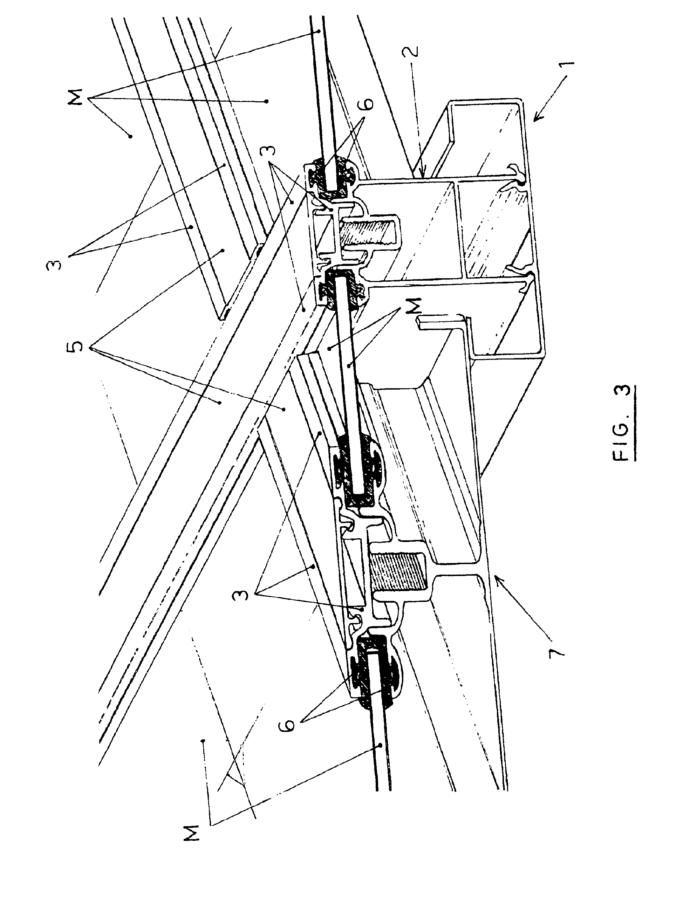

figure 3 - an axonometric section of the node of figure 2;

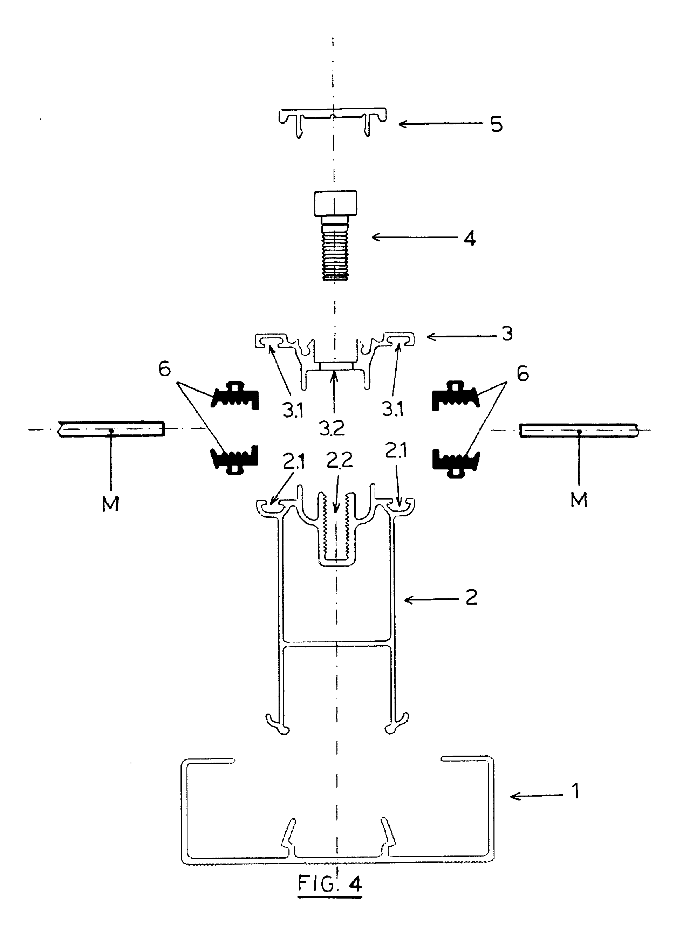

figure 4 - a transversal section of a central supporting profile rail in preassembly;
figure 5 - a transversal section of a central transverse profile rail in preassembly;
figure 6 - a transversal section of a perimetric supporting profile rail in preassembly;
figure 7 - a transversal section of a perimetric transverse profile rail in preassembly;
figures 8, 9, 10, 11 - the profile rails transversal sections of figures 4, 5, 6 and 7 after assembly;

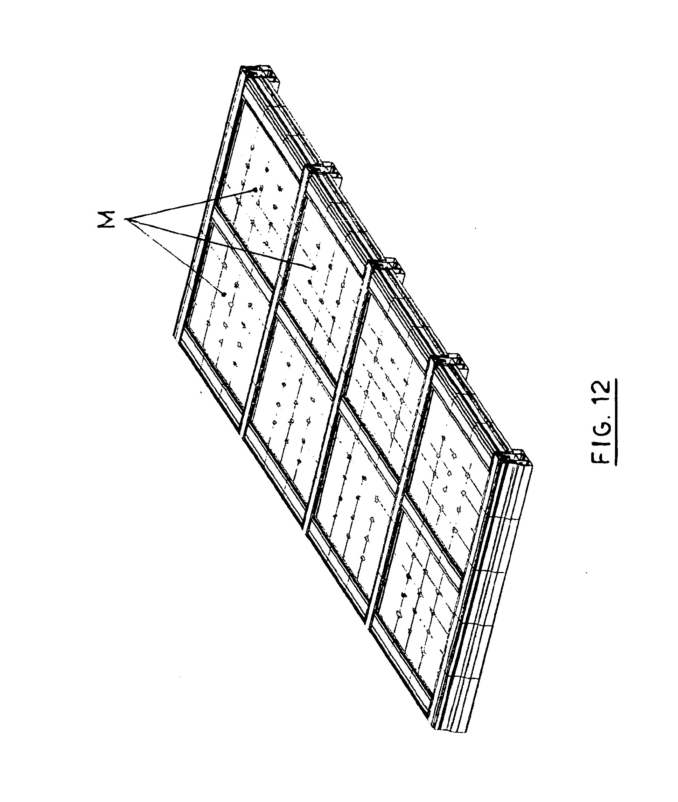

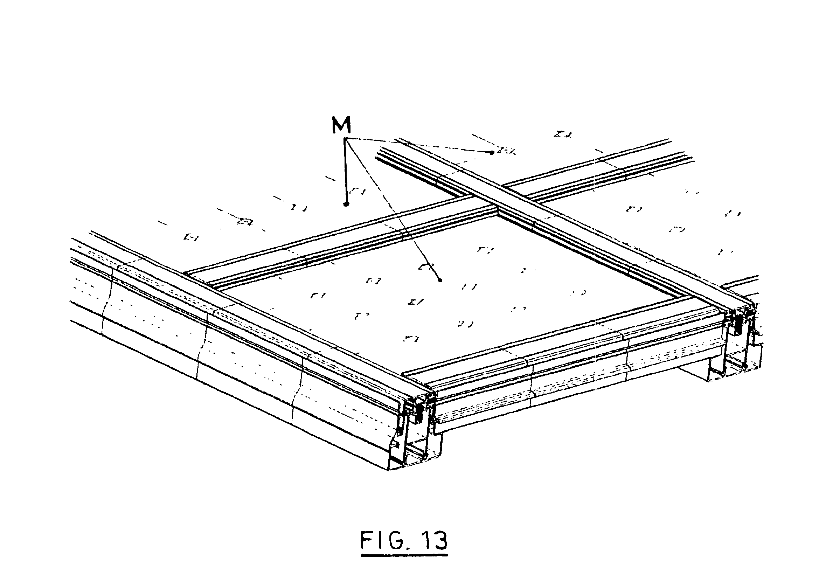

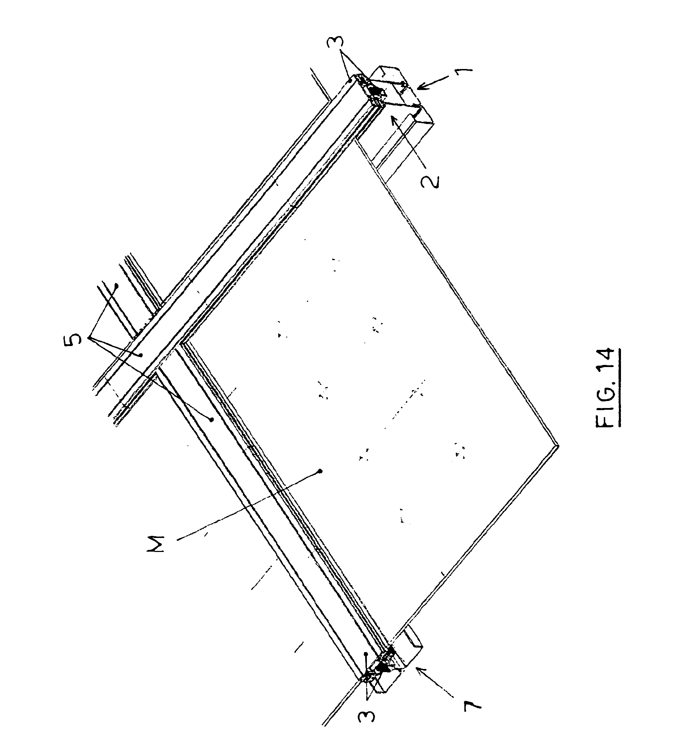

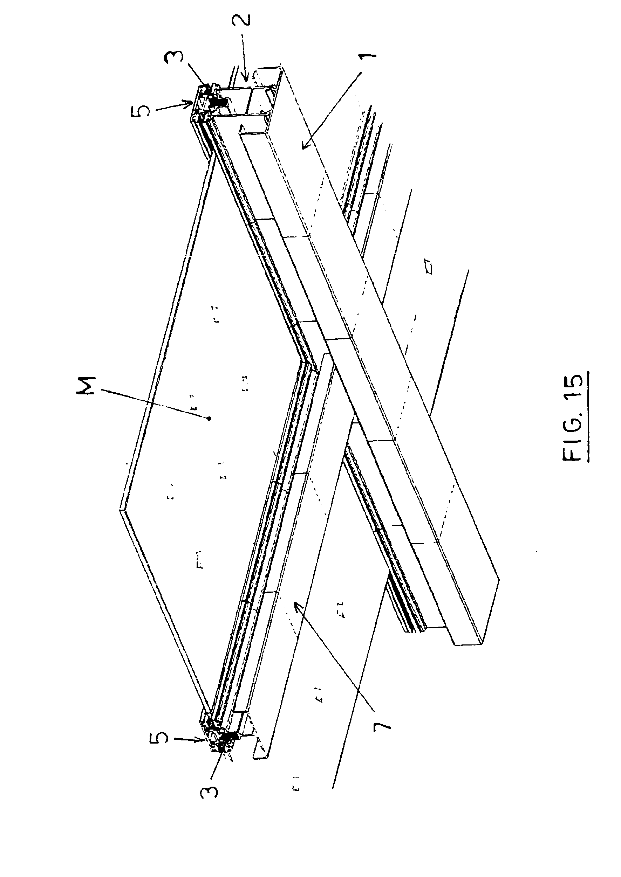

figures 12, 13, 14, 15 - further axonometric views of the system.

As illustrated in the figures the system is composed of metal profile rails assembled so as to form rectangular shaped meshes or grids for the insertion of photovoltaic modules positioned in horizontal or inclined planes.

To facilitate assembly in a short time, the components of each of said profile rails, are mutually connected by means of automatic devices, for the mutual interlocking snap, or by means of smooth or threaded pins.

In particular, the system is constituted by supporting profile rail, central or perimetric, and transverse profile rails, central or perimetric, forming boxes each for the insertion of one photovoltaic module, and delimited by suitable perimetric crankcases.

Each central supporting profile rail is constituted by a base profile rail 1, fixed with screws, on the roof battens or directly on concrete slope, at a distance given by the size of the module.

On said base profile rail 1 is mounted, by means of snap, a profile rail 2, provided with a threaded seat 2.2 and supports 2.1 for the insertion of gaskets 6.

A central locking device 3, provided with supports 3.1 for gaskets 6, arranged specularly with respect to the previous, permits to ensure, by means of screwing 4, on the underlying central profile rail 2, pairs of photovoltaic modules arranged on both sides of said central supporting profile rail.

Suitable covering elements 5 permit the coverage of said screwing means 4 by means of snap on said central locking device 3.

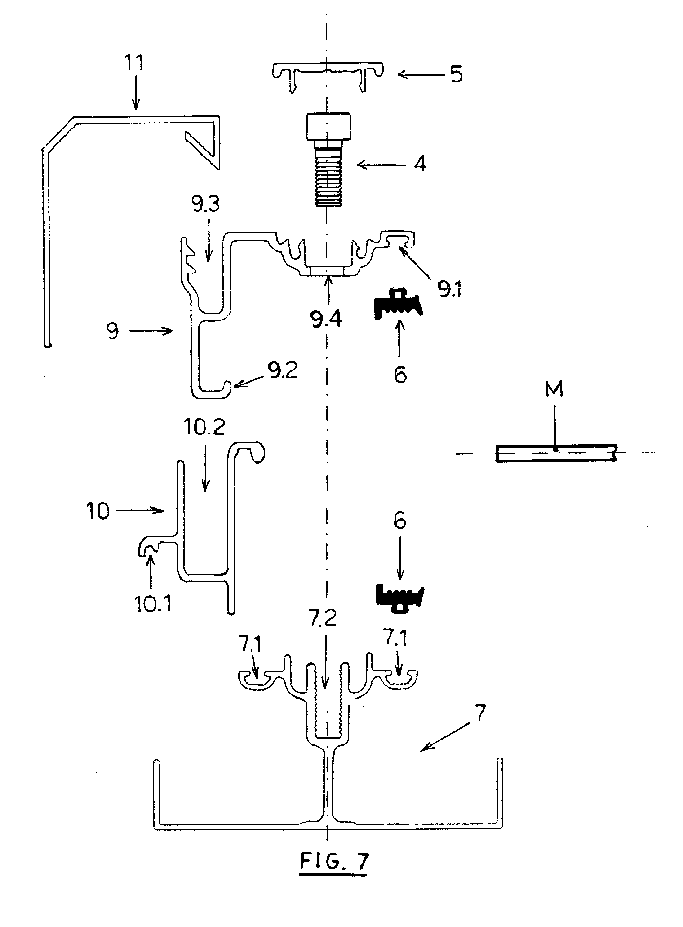

On both sides of the base profile rail 1 of each central supporting profile rail are supported and fixed orthogonally, by suitable means, for example rivets, the base profile rails 7 of pairs of central transverse profile rail, fig. 7.

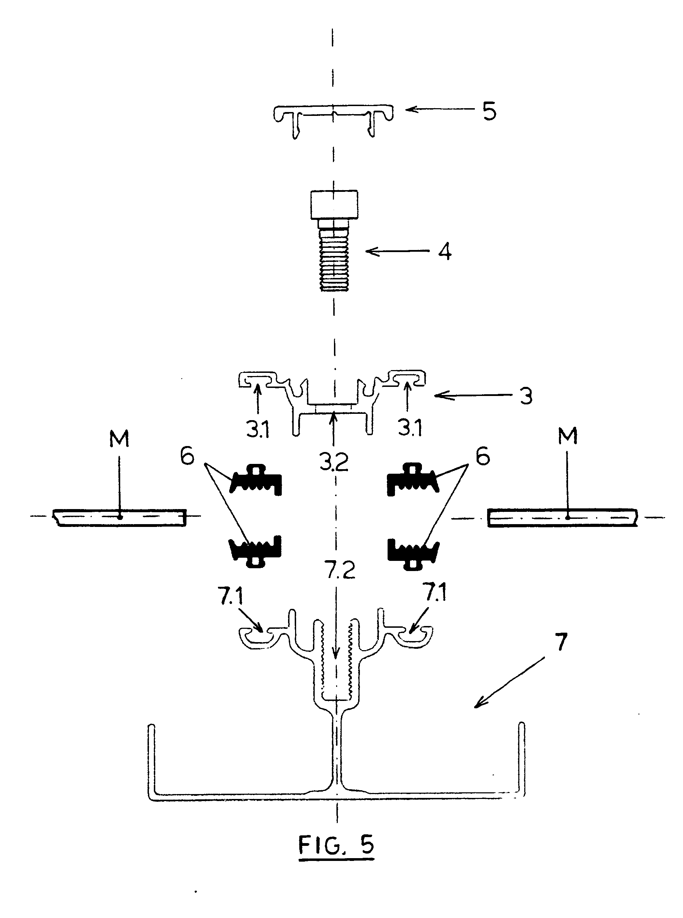

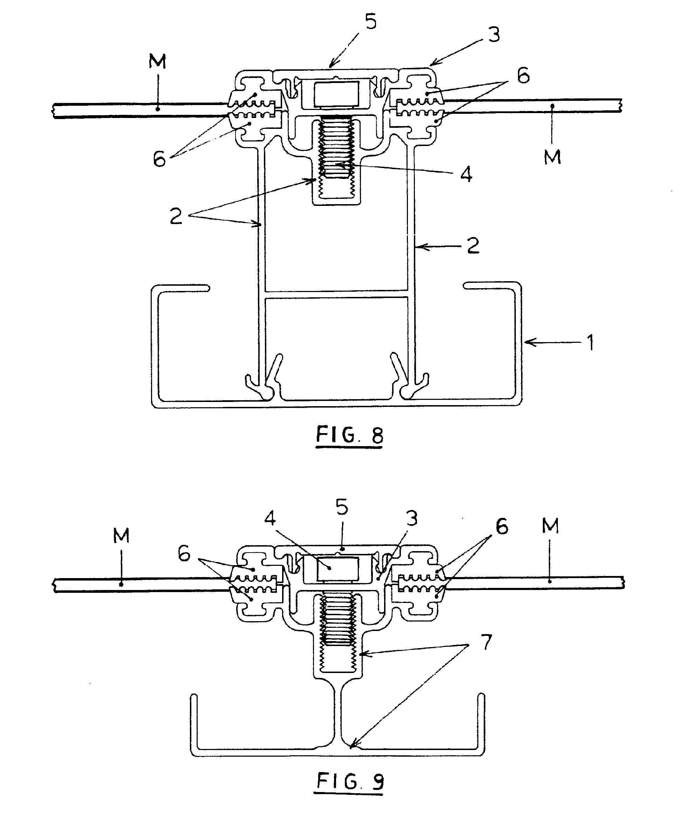

Each base profile rail 7 of said central transverse profile rail, illustrated in fig. 5 and 9, is provided with a threaded seat 7.2, and supports 7.1 for the insertion of gaskets 6.

A central locking device 3, provided with supports 3.1 for gaskets 6, arranged specularly with respect to the previous, permits to ensure, by means of screwing 4, on the underlying central transverse base profile rail 7, pairs of photovoltaic modules M arranged on both sides of said central transverse profile rail.

Suitable covering elements 5, permit the coverage of said screwing means 4 by means of snap on said central locking device 3.

The frame constituted by the intersection between central supporting profile rail and transverse profile rail form rectangular shaped meshes or grids each for the insertion of one photovoltaic module having two sides resting on the supporting profile rails, the others two on the transverse profile rails.

The perimeter of the system is enclosed by supporting and transverse profile rails parallel respectively to said central supporting and transverse profile rails.

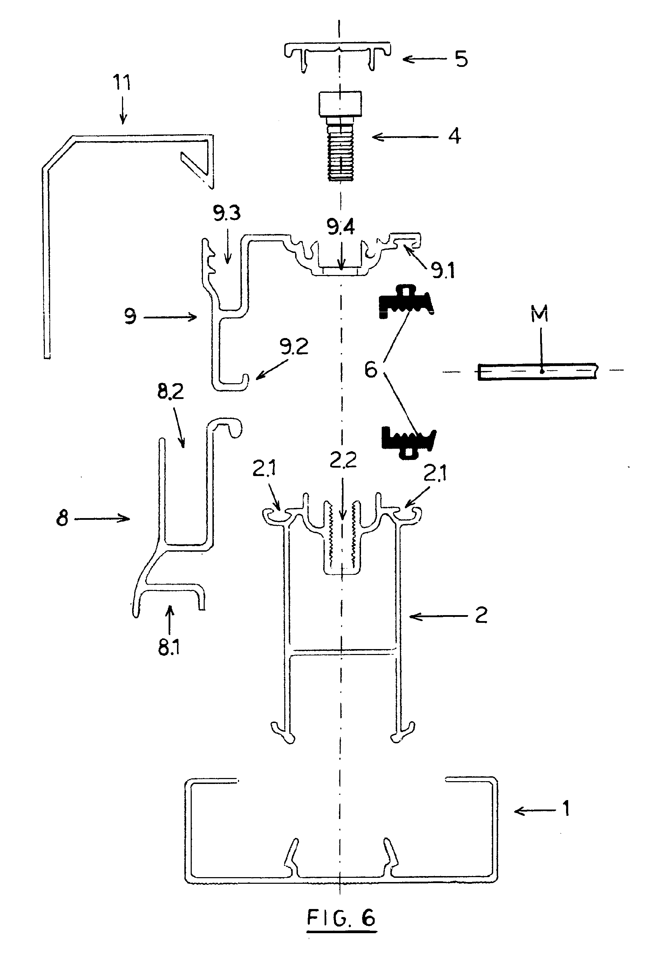

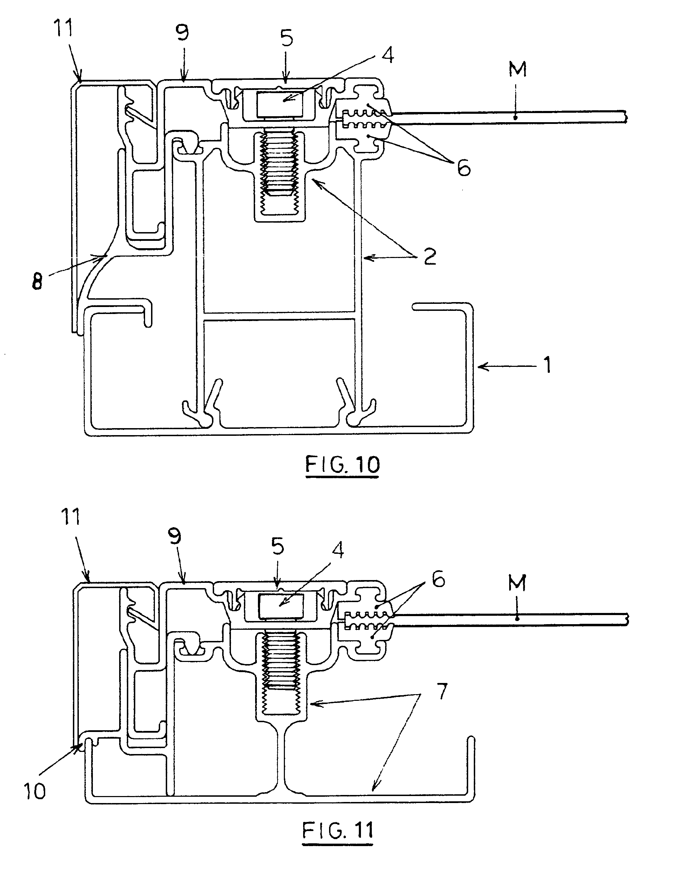

In particular, each perimetric supporting profile rail, illustrated in fig. 6 and 10, consist of a base profile rail 1, on which is mounted, by means of snap, a profile 2, provided with a threaded seat 2.2 and supports 2.1, on one side for the insertion of a gasket 6 and, on the another for the engagement of a perimetric crankcase 8, provided with a hooking device 8.1 to said base profile rail, and a with seat 8.2.

The photovoltaic modules are arranged laterally on one side of said perimetric supporting profile rail and are secured, by screwing means 4, by a perimetric locking device 9, provided on one end with a support 9.1 for a gasket 6, arranged specularly with respect to the previous one, on the other end with a coupling 9.2 inserting in the seat 8.2 of said crankcase 8 and with an overlying further seat 9.3, for the insertion and locking of a flashing 11.

A covering element 5 for said means of screwing 4, is snapped on said perimetric locking device 9.

Each perimetric transverse profile rail, illustrated in fig. 7 and 11, instead, consist of a base profile 7 provided with threaded seat 7.2 and supports 7.1, on one hand, for the insertion of a gasket 6 and, on the other, for the engagement of a perimetric crankcase 10, provided with a hooking device 10.1 to said base profile, and a seat 10.2.

The photovoltaic modules are arranged laterally on one side of said perimetric transverse profile rail and are secured by screwing means 4, by a perimetric locking device 9, provided on one end with a support 9.1 for a gasket 6, arranged specularly with respect to the previous one, on the other end with a coupling 9.2 inserting in the seat 10.2 of said crankcase 10 and with an overlying further seat 9.3, for the insertion and locking of a flashing 11.

A covering element 5 for said screwing means 4, is snapped on said perimetric locking device 9.

The lock of each locking device 3, 9 of each profile rail on the underlying profile rail 2 or 7, is carried out by screwing means 4 passing through suitable holes, respectively 3.2, 9.4 on locking devices and screwed into threaded seat 2.2, 7.2 conjugate formed in the underlying same profile rails.

The perimetric flashings 11 act as junction between the system itself and the remaining part of the structure on which it is applied.

The present patent application for invention has been illustrated with reference to a preferred embodiment; it should be understood, however, that the scope of the claims attached to this description should not be limited only to the above described embodiment.

On the contrary, the scope of rights in accordance with the present application shall include all modifications, corrections or the like provided that they are included in the scope of the attached claims.

## Claims

1. "System for assembling photovoltaic modules to be installed on the ground or on the top of buildings" comprising supporting profile rails, central or perimetric, and transverse profile rails, central or perimetric, forming rectangular shaped meshes or grids for the insertion of photovoltaic modules positioned in horizontal or inclined planes, **characterized by** the fact that the components of each of said profile rails are mutually connected by means of automated snap, consisting of reciprocal joints and smooth or threaded pins, or other suitable automatic devices, which facilitate assembly and disassembly rapidly,
each central supporting profile rail being constituted by:
• a base profile (1), on which is mounted, by means of snap, a profile (2), provided with supports (2.1), for gaskets (6), and threaded seat (2.2),
• a central locking device (3), provided with supports (3.1), for gaskets (6), arranged specularly with respect to the preceding,
• screwing connection means (4), and
• a covering element (5), of said screwing means,
the photovoltaic modules (M) being arranged on both sides of said central supporting profile rail and connected by means of overlapping and screwing of central locking device (3) on the underlying profile (2), the cover element (5) being snapped on said central locking device,
each central transverse profile rails being constituted by:
• a base profile (7) provided with supports (7.1) for gaskets (6), and threaded seat (7.2),
• a central locking device (3), provided with supports (3.1) for gaskets (6), arranged specularly with respect to the preceding,
• screwing connection means (4), and
• a covering element (5), of said screwing means,
the photovoltaic modules being arranged on both sides of said central transverse profile rail and connected by means of overlapping and screwing of central locking device (3) on the underlying base profile (7), the cover element (5) being snapped on said central locking device.

2. System according to claim 1 **characterized by** the fact that each central transverse profile rail is orthogonally supported on a side of the base profile (1) of the central supporting profile rail, and connected by suitable means so as to form squares, each for the insertion of photovoltaic modules.

3. System according to the preceding claims **characterized by** the fact that a perimetric supporting profile rail comprises:
• a base profile (1), on which is mounted, by means of snap, a profile (2), provided with a threaded seat (2.2) and supports (2.1), on one hand for a gasket (6) and the other for the engagement of
• a perimetric crankcase (8), provided with a coupling device (8.1) to said base profile and a seat (8.2),
• a perimetric locking device (9), provided, on one end, with a support (9.1) for a gasket (6), arranged specularly with respect to the previous one, on the other end with a coupling (9.2) inserting in the seat (8.2) of said crankcase and an overlying further seat (9.3) for the eventual insertion and locking of a flashing (11),
• screwing means (4), and
• a covering element (5), of said screwing means,
the photovoltaic modules being arranged laterally on one side of said perimetric supporting profile rail and being secured by screwing the locking perimetric device (9) on the underlying profile (2), the cover element (5) being snapped on said perimetric locking device.

4. System according to the preceding claims **characterized by** the fact that a perimetric transverse profile rail includes:
• a base profile (7) provided with a threaded seat (7.2) and supports (7.1), on one hand for a gasket (6) and the other for the engagement of
• a perimetric crankcase (10), provided with a coupling device (10.1) to said base profile and a seat (10.2),
• a perimetric locking device (9), provided, on one end, with a support (9.1) for a gasket (6), arranged specularly with respect to the previous one, on the other end with a coupling (9.2) inserting in the seat (10.2) of said housing and an overlying further housing (9.3), for the eventual insertion and locking of a flashing (11),
• screwing means (4), and
• a covering element (5), of said screwing means,
the photovoltaic modules being arranged laterally on one side of said perimetric transverse profile rail and being secured by screwing locking perimetric device (9) on the underlying base profile (7), the cover element (5) being snapped on said perimetric locking device.

5. System according to claims 3 and 4 **characterized by** the fact that the flashings (11) act as a junction between said system and the remaining portion of the structure on which it is applied, for example tiles in the case of pitched roofs.

6. System according to the preceding claims **characterized in that** the lock of each locking device (3, 9) of each profile rail on the underlying profile (2, 7) is made by means of bolts (4) inserted in suitable holes (3.2, 9.4) of said locking devices and screwed into the conjugate threaded holes (2.2, 7.2) obtained in said underlying profiles.

7. System according to the preceding claims **characterized in that** the design, i.e. the industrial models of the reciprocal connection/snapping means, are illustrated in the attached drawings.

8. System according to the preceding claims **characterized in that** the assembly of the elements forming the system is illustrated in figures 8, 9, 10, 11, 12, 13, 14, 15.

9. System according to the preceding claims **characterized in that** the profile rails forming said system are in aluminum or any other similar suitable material.

## Amended claims

### Amended claims in accordance with Rule 137(2) EPC.

**1.** "System for assembling photovoltaic modules to be installed on the ground or on the top of buildings" consisting in metallic supporting, central or perimetric profile rails, and transverse, central or perimetric profile rails, in turn forming the assembly of profiles (1, 2, 3, 4, 5, 7, 8, 9, 10, 11) **characterized in that** said profiles arc mutually fixed by suitable means so as to form rectangular-shaped seals for removable insertion of photovoltaic modules lying in horizontal or inclined planes and that the basis of profiles (1,7) of said supporting profiles is transversal, having a rectangular section open upward.

**2.** System according to claim 1 wherein each central supporting profile rail is constituted by:
• a base profile (1), on which is mounted, by means of snap, a profile (2), provided with supports (2.1), for gaskets (6), and threaded seat (2.2),
• a central locking device (3), provided with supports (3.1), for gaskets (6), arranged specularly with respect to the preceding,
• screwing connection means (4), and
• a covering element (5), of said screwing means,
and each central transverse profile rail is constituted by:
• a base profile (7) provided with supports (7.1) for gaskets (6), and threaded seat (7.2),
• a central locking device (3), provided with supports (3.1) for gaskets (6), arranged specularly with respect to the preceding,
• screwing connection means (4), and
• a covering element (5), of said screwing means,
and each perimetric transverse profile rail is constituted by:
• a base profile (7) provided with a threaded seat (7.2) and supports (7.1), on one hand for a gasket (6) and the other for the engagement of
• a perimetric crankcase (10), provided with a coupling device (10.1) to said base profile and a seat (10.2),
• a perimetric locking device (9), provided, on one end, with a support (9.1) for a gasket (6), arranged specularly with respect to the previous one, on the other end with a coupling (9.2) inserting in the seat (10.2) of said housing and an overlying further housing (9.3), for the eventual insertion and locking of a flashing (11),
• screwing means (4), and
• a covering element (5), of said screwing means,
**characterised by** the fact that one, or more perimetric transverse profile rails, aligned and arranged in succession, resting on the base profile (1) of one or more perimetric supporting profile rail, aligned and arranged in succession, orthogonally to it / them, and fixed by suitable means, form the perimeter of a or more rectangular-shaped seats, for the insertion of a photovoltaic module.

**5.** System according to the preceding claims **characterised in that** the photovoltaic modules (M) are arranged laterally on one side of each perimetric supporting profile rail and are secured by screwing locking perimetric device (9) on the underlying profile rail (2), the cover element (5) being snapped on said perimetric locking device and photovoltaic modules are arranged laterally on one side of each perimetric transverse profile rail and are secured by screwing locking perimetric device (9) on the underlying base profile rail (7), the cover element (5) being snapped on said perimetric locking device.

**6.** System according to previous claims **characterized in that** the basis of profiles (1,7) of said supporting profiles is transversal, with a rectangular section with a top opening, respectively similar to an inverted C and U, mutually connected in the longitudinal and transverse direction, forming a system of collection and channeling of the water of condensation and rainwater that can filter as a result of lack of tightness of gaskets (6).

**7.** System according to claim 4 **characterized in that** the flashing (11) act as means of connection between the system itself and the remaining portion of the structure on which it is applied, for example tiles in the case of pitched roofs.

**8.** System according to the preceding claims **characterised in that** the lock of each locking device (3, 9) of each underlying profile rail (2, 7) is made by means of bolts (4) inserted in suitable holes (3.2, 9.4) of said locking devices and screwed into the conjugate threaded holes (2.2, 7.2) obtained in said underlying profiles.

**9.** System according to the preceding claims **characterized in that** the profile rails forming said system are in aluminum or any other similar suitable material.
